# EUROPÄISCHE PATENTSCHRIFT

(11) **EP 2 134 437 B1**
(45) Veröffentlichungstag und Bekanntmachung des Hinweises auf die Patenterteilung: **13.06.2018**
(21) Anmeldenummer: 07856395.4
(22) Anmeldetag: 06.12.2007
(51) Int. Cl.: B01D 29/11, B01D 29/21

(54) **VERFAHREN ZUM HERSTELLEN EINES FILTERELEMENTES UND NACH DEM VERFAHREN HERGESTELLTES FILTERELEMENT**
METHOD FOR THE PRODUCTION OF A FILTER ELEMENT AND FILTER ELEMENT PRODUCED ACCORDING TO SAID METHOD
PROCÉDÉ DE FABRICATION D'UN ÉLÉMENT FILTRANT ET ÉLÉMENT FILTRANT FABRIQUÉ SELON CE PROCÉDÉ

(30) Priorität: 20.03.2007 DE 102007013178
(43) Veröffentlichungstag der Anmeldung: 23.12.2009
(73) Patentinhaber: Hydac Filtertechnik GmbH, 66280 Sulzbach/Saar (DE)
(72) Erfinder: GALIFI, Giuseppe, 66125 Saarbrücken (DE); MEES, Harald, 55822 Lebach (DE)
(74) Vertreter: Bartels und Partner, Patentanwälte
(86) Internationale Anmeldenummer: PCT/EP2007/010587
(87) Internationale Veröffentlichungsnummer: WO 2008/113399

(56) Entgegenhaltungen:
- EP-A- 1 695 751
- WO-A-2008/015092
- DE-A1- 19 919 289
- DE-A1-102005 040 417
- DE-A1-102006 028 116
- FR-A1- 2 841 795
- JP-A- 5 111 622
- US-A- 5 230 760

## Beschreibung

Die Erfindung betrifft ein Verfahren zum Herstellen eines Filterelementes mit den Merkmalen im Oberbegriff von Anspruch 1 und ein nach dem Verfahren hergestelltes Filterelement.

Die Erfindung bezieht sich allgemein auf die Herstellung von Filterelementen, wie sie auf vielen Gebieten der Technik für die Filtration von Fluiden verschiedener Art zum Einsatz kommen, beispielsweise Hydraulikflüssigkeiten, Schmierstoffe, Kraftstoffe und dergleichen mehr. Solche Filterelemente werden aus Gründen der rationellen Fertigung, des geringen Gewichtes, der einfachen Entsorgung und Recyclierung, vorzugsweise aus metallfreien Komponenten aufgebaut, wobei ein Filtermedium, das einen bei der Filtration die Schmutzseite bildenden inneren Filterhohlraum umgibt, von dem zu reinigenden Fluid von innen nach außen durchströmt wird und wobei der Filterhohlraum an zumindest einem Ende durch eine Endkappe abgeschlossen ist, die für das angrenzende Ende des Filtermediums eine Einfassung bildet.

Die Verbindung zwischen dem Filtermedium und dem Einfassungsbereich an der betreffenden Endkappe muss nicht nur fluiddicht ausgebildet sein, sondern es muss auch ein mechanisch fester Verbund gebildet werden, um die Strukturfestigkeit des Filterelementes zu gewährleisten. Bei der Herstellung kommen daher aufwändige Fügeverfahren zur Anwendung, beispielsweise das Einkleben des Endrandes des Filtermediums in die Einfassung an der Endkappe. Wie sich gezeigt hat, sind derartige Fügeverfahren zeitaufwendig, so dass sich entsprechend hohe Herstellungskosten ergeben.

In der DE 199 19 289 A1 wird ein gattungsgemäßes Verfahren zum Herstellen eines dichten Abschlusses aus Kunststoff an den Stirnkanten eines zickzack-förmig gefalteten Bahnenmaterials eines Filters offenbart. Durch Einformen der Stirnkanten in induktiv erschmolzenes, mit das induktive Erhitzen ermöglichenden Partikeln versetztes Kunststoffmaterial wird eine rationelle Serienherstellung von Filtern mit Kunststoffendscheiben ermöglicht.

Weitere Verfahren zum Herstellen von Filterelementen gehen aus der FR 2 841 795 A1, der US 5 230 760 und der JP H05-111622 hervor.

Im Hinblick auf diese Problematik stellt sich die Erfindung die Aufgabe, ein Verfahren anzugeben, das eine besonders rationelle und kostengünstige Herstellung von Filterelementen ermöglicht. Erfindungsgemäß ist diese Aufgabe durch ein Verfahren gelöst, das die Merkmale des Patentanspruches 1 in seiner Gesamtheit aufweist.

Gemäß dem Kennzeichen von Anspruch 1 ist vorgesehen, dass ein Stützkörper als fluiddurchlässiger Zylindermantel vorgesehen wird, in welchem das Filtermedium eingesetzt ist; dass zur Bildung der Sperrschicht eine laserundurchlässige Schweißfolie in eine durch die Endkappe gebildete Einfassung für das Filtermedium sowie zwischen der Endkappe und dem angrenzenden Ende des Filtermediums eingelegt wird, wobei sich die Schweißfolie über das Ende des Ringkörpers und einen Endrand des Stützkörpers erstreckt, und zwar anliegend an der in einer Radialebene verlaufenden Innenseite der Endkappe; und dass in einem Zuge eine Schweißverbindung zwischen dem Ende des Ringkörpers, dem Endrand des Stützkörpers und der angrenzenden Fläche, einer Radialebene zur Längsachse, der Einfassung der Endkappe hergestellt wird.

Mit den Verfahrensschritten a) bis d) des Oberbegriffs von Anspruch 1 eröffnet die Erfindung die Möglichkeit, die Verbindung zwischen Endkappe und Filtermedium in besonders rationeller Weise mittels Laser-Durchstrahlschweißens zu erzeugen. Obgleich die Laserdurchlässigkeit der Endkappe bei Durchstrahlung mit Laserlicht wenig Absorption des Laserlichtes und damit nur geringe Freisetzung von Wärmeenergie ermöglicht und obgleich die üblichen, metallfrei aufgebauten Filtermedien nicht geeignet sind, Laserlicht zur Erzeugung von Schweißenergie zu absorbieren, stellt der erfindungsgemäße Verfahrensschritt c) durch Ausbilden der laserundurchlässigen Sperrschicht zwischen Endkappe und angrenzendem Ende des Filtermediums die Energieabsorption im unmittelbaren Schweißbereich sicher. Der durch das Laserlicht erhitzte und aufschmelzende Materialbereich bildet daher das Fügeelement zum Verschmelzen der angrenzenden Fügepartner und somit zum Verschweißen von Endkappe und Filtermedium.

Die laserundurchlässige Sperrschicht kann dadurch gebildet werden, dass im Zuge des Herstellungsprozesses beim Spritzgießen der Endkappe durch Hinterspritzen einer Folie die Sperrschicht erzeugt wird. Ebenso kann das Ende des Filtermediums bereits beim Vorbereiten des Schweißens mit einer die Sperrschicht bildenden, Laserlicht absorbierenden Flüssigkeit versehen werden.

In entsprechender Weise kann eine zweite laserundurchlässige Sperrschicht, vorzugsweise eine zweite Schweißfolie, an dem der ersten Endkappe entgegensetzten zweiten Ende des Filtermediums zwischen diesem und einer zugeordneten zweiten Endkappe eingelegt und durch Laser-Durchstrahlschweißen eine Schweißverbindung auch zwischen zweiter Endkappe und dem angrenzenden Filterelement erzeugt werden.

In besonders vorteilhafter Weise kann hierbei so vorgegangen werden, dass auch die zweite Endkappe mittels des Laser-Durchstrahlschweißens auch mit dem zugeordneten Ende des Stützkörpers verschweißt wird, was die besonders rationelle Herstellung der Filterelemente ermöglicht.

Als Material für Endkappen und Stützkörper kann ein thermoplastischer, laserdurchlässiger Kunststoff benutzt werden, insbesondere Polyamid.

Als Material der Schweißfolie kommt ebenfalls Polyamid in Frage, wobei eine Folienstärke von 0,03 bis 0,1 mm, vorzugsweise von 0,05 mm, benutzt werden kann. Was die Werkstoffwahl von Endkappen, Schweißfolie und Filtermedium anbelangt, wird jedenfalls so vorgegangen, dass die Schweißfolie eine Verbindung artverwandter Kunststoffmaterialien ermöglicht, und auch solcher Kunststoffmaterialien, die ohne das von der aufgeschmolzenen Schweißfolie gebildete Fügeelement nicht unmittelbar miteinander verschweißbar wären.

Als Filtermedium kann in vorteilhafter Weise ein Ringkörper aus einer gefalteten, mehrlagigen Filtermattenbahn benutzt werden, beispielsweise in solcher Bauweise, wie sie aus der WO 2004/014516 A1 an sich bekannt ist.

Gegenstand der Erfindung ist auch ein nach dem erfindungsgemäßen Verfahren hergestelltes Filterelement, das die Merkmale des Patentanspruches 7 in seiner Gesamtheit aufweist.

Nachstehend ist die Erfindung anhand von in der Zeichnung dargestellten Ausführungsbeispielen im Einzelnen erläutert. Es zeigen:
- Fig. 1: einen in annähernd natürlichem Maßstab gezeichneten Längsschnitt eines Ausführungsbeispieles eines gemäß dem erfindungsgemäßen Verfahren hergestellten Filterelementes;
- Fig. 2: einen demgegenüber 5-fach vergrößerten Ausschnitt des in Fig. 1 mit II bezeichneten Bereiches; und
- Fig. 3: einen in annähernd natürlichem Maßstab gezeichneten Längsschnitt einer Filtervorrichtung, in die ein zweites Ausführungsbeispiel eines gemäß dem erfindungsgemäßen Verfahren hergestellten Filterelementes eingebaut ist.

Nachstehend ist die Erfindung anhand einer Ausführungsform erläutert, bei der das Bilden der laserundurchlässigen Sperrschicht in der Weise erfolgt, dass eine unten näher spezifizierte Schweißfolie als Einlegeteil, das vor dem Schweißvorgang in Stellung gebracht wird, benutzt wird.

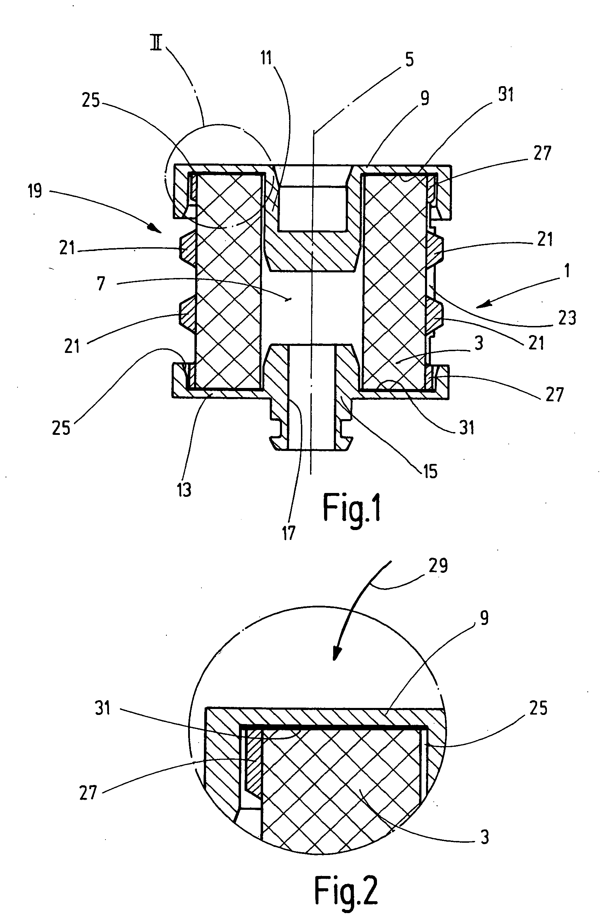

Fig. 1 und 2 zeigen ein erstes Ausführungsbeispiel eines gemäß dem erfindungsgemäßen Verfahren hergestellten Filterelementes, das als Ganzes mit 1 bezeichnet ist. Hauptbestandteil ist ein Filtermedium, gebildet aus einer zu einem Ringkörper 3 gestalteten Filtermatte, der in Form eines Hohlzylinders, konzentrisch zu einer Längsachse 5, einen inneren Filterhohlraum 7 umgibt. Dieser ist an einem Ende durch eine deckelseitige Endkappe 9 abgeschlossen, die aus Polyamid einstückig geformt ist und einen zentralen, am inneren Ende geschlossenen Hohlzapfen 11 aufweist, der sich entlang der Innenseite des Ringkörpers 3 in den Filterhohlraum 7 hinein erstreckt. Am entgegengesetzten, bodenseitigen Ende ist der Filterhohlraum 7 durch eine bodenseitige Endkappe 13 begrenzt, die ebenfalls aus Polyamid einstückig geformt ist und einen zentralen Hohlzapfen 15 aufweist, der, ähnlich wie der Hohlzapfen 11, konzentrisch zur Längsachse 5 in den Filterhohlraum 7 ragt. Anders als der Hohlzapfen 11 ist der Hohlzapfen 15 durchgehend von einer zentralen Einströmöffnung 17 durchzogen, über die ein zu reinigendes Fluid in den Filterhohlraum 7 beim Filtrationsvorgang einströmt.

Der aus der Filtermatte gebildete Ringkörper 3 ist an seiner Außenseite an einem anliegenden Stützkörper 19 aus Polyamid abgestützt, der einen Mantelkörper mit Rippen 21 bildet, zwischen denen sich Fluiddurchlässe 23 befinden, durch die hindurch abgereinigtes Fluid nach Durchströmen des Ringkörpers 3 austritt.

Die Endkappen 9 und 13 bilden jeweils eine Einfassung 25 für die Enden des Ringkörpers 3 und die Endränder 27 des Stützkörpers 19. Mittels Laser-Durchstrahlschweißens, wobei Laserlicht wie in Fig. 2 mit einem Pfeil 29 angedeutet, auf die laserdurchlässige Endkappe 9 (und ebenso 13) aufgestrahlt wird, wird jeweils in einem Zuge eine Schweißverbindung zwischen dem Ende des Ringkörpers 3, dem Endrand 27 des Stützkörpers 19 und der angrenzenden Fläche (Radialebene zur Längsachse 5) der Einfassung 25 der Endkappen hergestellt.

Damit dies trotz der Laserdurchlässigkeit von Endkappen 9 und 11 sowie Ringkörper 3, die nicht für die Absorption von Lichtenergie zur Verfügung stehen, ermöglicht wird, ist eine laserundurchlässige Schweißfolie 31 in die Einfassung 25 so eingelegt, dass sie sich über die Enden des Ringkörpers 3 und den Endrand 27 des Stützkörpers 19 erstreckt, und zwar anliegend an der in einer Radialebene verlaufenden Innenseite der Endkappen 9 und 13. Die kreisringförmige Schweißfolie 31 ist so gewählt, dass sie in einem Wellenlängenbereich von 150 bis 2500 nm, vorzugsweise von 500 bis 1500 nm, strahlungsundurchlässig ist, d. h. Infrarot- oder Laserlicht absorbiert, wobei eine Folienstärke etwa zwischen 0,03 bis 0,1 mm, vorzugsweise etwa 0,05 mm, vorgesehen ist. Dabei kann es sich um eine Polyamidfolie mit eingebetteten laser- oder infrarotsensitiven Partikeln handeln, insbesondere Farbpigmente wie Ruß oder dergleichen, wobei diese Partikel eine entsprechende Mindesttemperaturstabilität aufweisen. Hierbei kann so vorgegangen werden, dass die einen Ring bildende Schweißfolie 31 mit einem gepulsten Laser oder einem Dauerlaser bestrahlt wird, dessen Strahlbereich über den Ringbereich der Schweißfolie 31 hinweg durch die betreffenden Endkappen 9 und 13 hindurch aufgestrahlt wird, bis es zum Aufschmelzen der Schweißfolie 31 und zum Verschmelzen mit den anliegenden Bereichen der Endkappen 9, 13, der Endränder 27 des Stützkörpers 19 und dem betreffenden Ende des Ringkörpers 3 des Filtermediums kommt.

Das den Ringkörper 3 bildende Filtermedium kann als beispielsweise sechslagig aufgebaute Filtermattenbahn vorgesehen sein, die in Aufeinanderfolge eine äußere Abstützung, ein Schutzvlies, eine Vorfilterlage, eine Hauptfilterlage, ein Stützvlies und eine innere Abstützung aufweist. Da für einige dieser Lagen ein Polyamidgitter oder ein Polyestergewebe in Frage kommt, ist das Filtermedium heißsiegelbar, d. h. dazu geeignet, als Fügepartner über die aufschmelzende Schweißfolie 31 mit der Endkappe 9, 13 und dem Endrand 27 des Stützkörpers 19 als den anderen Fügepartnern verschweißt zu werden. Insbesondere ist die Filtermattenbahn zur Erhöhung der Schmutzaufnahmekapazität plissiert ausgebildet und derart mit mindestens einer freien Stirnseite an der zugehörigen Endkappe festgelegt. Die Aufschmelzzone an der freien Stirnseite der Filtermattenbahn ist dabei, in axialer Längsrichtung des Ringkörpers 3 betrachtet, ausgesprochen gering bemessen, so dass durch den Festlegevorgang die freie Durchströmung des Filtermediums nicht beeinträchtigt ist.

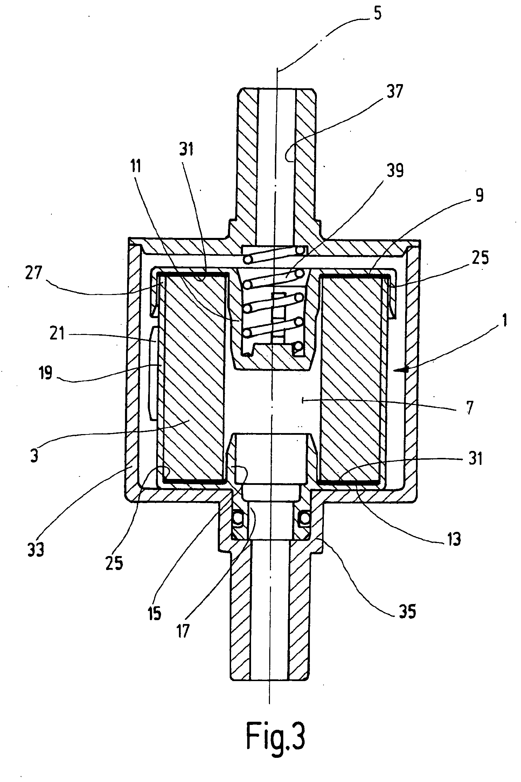

Die Fig. 3 zeigt ein gegenüber Fig. 1 und 2 abgewandeltes Beispiel des Filterelementes, eingebaut in ein eine Filtervorrichtung komplettierendes Filtergehäuse 33. Dieses weist einen bodenseitigen Fluideinlass 35 auf, dessen Öffnungsrand eine Elementaufnahme für das Filterelement 1 bildet, dessen bodenseitiger Hohlzapfen 15 unter Abdichtung in der Öffnung des Einlasses 35 sitzt. Am gegenüberliegenden Ende weist das Filtergehäuse 33 einen Fluidauslass 37 für gereinigtes Fluid auf, wobei sich in den am inneren Ende geschlossenen oberen Hohlzapfen 11 eine am Rand des Fluidauslasses 37 abgestützte Druckfeder 39 in den Hohlzapfen 11 erstreckt, um das Filterelement 1 in die Elementaufnahme am Einlass 35 zu drücken.

Der einzige Unterschied des Filterelementes 1 des Beispieles von Fig. 3 gegenüber dem Beispiel von Fig. 1 und 2 besteht darin, dass die den bodenseitigen Hohlzapfen 15 aufweisende untere Endkappe 13 umfangsseitig über die Einfassung 25 hinaus axial bis zur oberen Endkappe 9 hin verlängert ist und dass dieser Fortsatz den fluiddurchlässigen Stützkörper 19 bildet, an dessen Innenseite der Ringkörper 3 anliegt. Wie dies bei dem Stützkörper 19 von Fig. 1 und 2 der Fall ist, erstreckt sich sein Endrand 27 bis in die Einfassung 25 an der oberen Endkappe 9, so dass auch bei diesem Ausführungsbeispiel mittels Laser-Durchstrahlweißens mit Hilfe der Schweißfolie 31 die Schweißverbindung zwischen Ringkörper 3, Endrand 27 des Stützkörpers 19 und der Endkappe 9 hergestellt wird. In entsprechender Weise erfolgt das Verschweißen des unteren Endes des Ringkörpers 3 mit Hilfe der Schweißfolie 31, die an der unteren Endkappe 13 eingelegt ist, also das Verschweißen des unteren Endes des Ringkörpers 3 mit der unteren Endkappe 13.

Anstelle des Einlegens einer separaten Schweißfolie kann mithin die Endkappe 9, 13 auch bereits mit einer Sperrschicht versehen sein. Diese Sperrschicht kann durch Hinterspritzen mit einem geeigneten Kunststoffmaterial, das die Folie ausbildet, hergestellt werden, und zwar zusammen mit dem Herstellungsprozeß der Endkappe, die üblicherweise durch ein Spritzgießverfahren herstellbar ist. Ebenso kann das freie Ende oder der freie Endbereich des jeweiligen Filtermediums 3 vor dem eigentlichen Durchstrahlschweißverfahren mit einer Sperrschicht, z.B. durch Aufbringen einer Laserlicht absorbierenden Flüssigkeit, versehen sein. Hier können auch nanopartikuläre Fluide zum Einsatz kommen, die beispielsweise über entsprechende Graphitanteile od. dgl. verfügen. Sofern in der vorliegenden Beschreibung und in den Ansprüchen von laserundurchlässigen Sperrschichten die Rede ist, sind auch von der Laserdurchlässigkeit her reduzierte Sperrschichten angesprochen, die also partiell einen gewissen Anteil an Laserlicht noch durchlassen können und dennoch so viel Energie aufnehmen, dass die gewünschte Schweißverbindung herstellbar ist.

## Patentansprüche

1. Verfahren zum Herstellen eines Filterelementes (1), mit den Schritten:
a) Vorsehen eines Filtermediums (3), das in Form eines Ringkörpers (3) einen inneren Filterhohlraum (7) umgibt und ein heißsiegelbares Material enthält;
b) Vorsehen zumindest einer einen Abschluß des Filterhohlraumes (7) an zumindest einem Ende bildenden Endkappe (9, 13) aus thermoplastischem, laserdurchlässigem Material;
c) Ausbilden einer laserundurchlässigen Sperrschicht (31) zwischen Endkappe (9, 13) und angrenzendem Ende des Filtermediums (3) und
d) Verschweißen von Endkappe (9, 13) und Filtermedium (3), indem an die Sperrschicht (31) angrenzendes laserdurchlässiges Material mit Laserenergie derart durchstrahlt wird, dass durch Erhitzen des an die Sperrschicht (31) angrenzenden Bereiches ein Schweißvolumen als Fügeelement für die durch Laser-Durchstrahlschweißen erzeugte Schweißverbindung zur Verfügung gestellt wird,
**dadurch gekennzeichnet,**
**dass** ein Stützkörper (19) als fluiddurchlässiger Zylindermantel vorgesehen wird, in welchem das Filtermedium (3) eingesetzt ist;
**dass** zur Bildung der Sperrschicht (31) eine laserundurchlässige Schweißfolie in eine durch die Endkappe (9, 13) gebildete Einfassung (25) für das Filtermedium (3) sowie zwischen der Endkappe (9, 13) und dem angrenzenden Ende des Filtermediums (3) eingelegt wird, wobei sich die Schweißfolie (31) über das Ende des Ringkörpers (3) und einen Endrand (27) des Stützkörpers (19) erstreckt, und zwar anliegend an der in einer Radialebene verlaufenden Innenseite der Endkappe (9, 13); und
**dass** in einem Zuge eine Schweißverbindung zwischen dem Ende des Ringkörpers (3), dem Endrand (27) des Stützkörpers (19) und der angrenzenden Fläche, einer Radialebene zur Längsachse (5), der Einfassung (25) der Endkappe (9, 13) hergestellt wird.

2. Verfahren nach Anspruch 1, **dadurch gekennzeichnet, dass** eine zweite laserundurchlässige Sperrschicht (31) an dem der ersten Endkappe (9) entgegengesetzten zweiten Ende des Filtermediums (3) zwischen diesem und einer zugeordneten zweiten Endkappe (13) ausgebildet wird und durch Laser-Durchstrahlschweißen eine Schweißverbindung auch zwischen zweiter Endkappe (13) und dem angrenzenden Filtermaterial (3) erzeugt wird.

3. Verfahren nach Anspruch 1 oder 2, **dadurch gekennzeichnet, dass** die zweite Endkappe (13) mittels des Laser-Durchstrahlschweißens auch mit dem zugeordneten Ende (27) des Stützkörpers (19) verschweißt wird.

4. Verfahren nach einem der Ansprüche 1 bis 3, **dadurch gekennzeichnet, dass** als Material für Endkappen (9, 13) und Stützkörper (19) ein thermoplastischer Kunststoff, insbesondere Polyamid, benutzt wird, wobei zumindest das Material der Endkappen (9, 13) laserdurchlässig ist.

5. Verfahren nach einem der Ansprüche 1 bis 4, **dadurch gekennzeichnet, dass** als Material der Schweißfolie (31) Polyamid in einer Stärke von 0,03 bis 0,1mm, vorzugsweise von 0,05mm benutzt wird.

6. Verfahren nach einem der Ansprüche 1 bis 5, **dadurch gekennzeichnet, dass** als Filtermedium ein Ringkörper (3) aus einer gefalteten, mehrlagigen Filtermattenbahn benutzt wird.

7. Nach dem Verfahren nach einem der Ansprüche 1 bis 6 hergestelltes Filterelement (1) aufweisend:
a) ein Filtermedium (3), das in Form eines Ringkörpers (3) einen inneren Filterhohlraum (7) umgibt und ein heißsiegelbares Material enthält;
b) zumindest eine einen Abschluss des Filterhohlraumes (7) an zumindest einem Ende bildende Endkappe (9, 13) aus thermoplastischem, laserdurchlässigem Material; und
c) einen Stützkörper (19) der als fluiddurchlässiger Zylindermantel ausgebildet ist, in welchem das Filtermedium (3) eingesetzt ist; wobei
d) die Endkappe (9, 13) aus einem laserdurchlässigen Kunststoffmaterial gebildet und nach Einlegen einer eine Sperrschicht (31) bildenden laserundurchlässigen Schweißfolie zwischen einer durch die Endkappe (9, 13) gebildeten Einfassung (25) für das Filtermedium (3) und dem angrenzenden Ende des Filtermediums (3) mittels Laser-Durchstrahlschweißen mit dem angrenzenden Ende des Filtermediums (3) verschweißt ist.

## Claims

1. A method for the production of a filter element (1), comprising the steps:
a) providing a filter medium (3) which surrounds an inner filter cavity (7) in the form of an annular body (3) and contains a hot-sealable material;
b) providing at least one end cap (9, 13) made of thermoplastic, laser-permeable material and which forms a closure of the filter cavity (7) on at least one end;
c) forming a laser-impermeable barrier layer (31) between the end cap (9, 13) and the bordering end of the filter medium (3), and
d) welding the end cap (9, 13) and the filter medium (3) by irradiating a laser-permeable material bordering the barrier layer (31) with laser energy such that by heating the region bordering the barrier layer (31) a welding volume is made available as a joining element for the welded joint produced by laser transmission welding,
**characterised in that**
a support body (19) is provided as a fluid-permeable cylinder jacket into which the filter medium (3) is inserted;
to form the barrier layer (31) a laser-impermeable welding film is inserted into an enclosure (25) for the filter medium (3) formed by the end cap (9, 13) and between the end cap (9, 13) and the bordering end of the filter medium (3), the welding film (31) extending over the end of the annular body (3) and an end edge (27) of the support body (19), resting against inside of the end cap (9, 13) running in a radial plane; and
a welded joint is produced in one go between the end of the annular body (3), the end edge (27) of the support body (19) and the bordering surface, a radial plane to the longitudinal axis (5), the enclosure (25) of the end cap (9, 13).

2. The method according to Claim 1, **characterised in that** a second laser-impermeable barrier layer (31) is formed on the second end of the filter medium (3) opposite the first end cap (9), between the medium and an assigned second end cap (13), and a welded joint is also produced by laser transmission welding between the second end cap (13) and the bordering filter material (3).

3. The method according to Claim 1 or 2, **characterised in that** the second end cap (13) is also welded by means of laser transmission welding to the assigned end (27) of the support body (19).

4. The method according to any of Claims 1 to 3, **characterised in that** the material for the end caps (9, 13) and the support body (19) is a thermoplastic, in particular polyamide, at least the material of the end caps (9, 13) being laser-permeable.

5. The method according to any of Claims 1 to 4, **characterised in that** the material of the welding film (31) is polyamide in a thickness from 0.03 to 0.01 mm, preferably of 0.05 mm.

6. The method according to any of Claims 1 to 5, **characterised in that** the filter medium is an annular body (3) made of a folded, multilayer filter mat length.

7. A filter element (1) produced by the method according to any of Claims 1 to 6, comprising:
a) a filter medium (3) which surrounds an inner filter cavity (7) in the form of an annular body (3) and contains a hot-sealable material;
b) at least one end cap (9, 13) made of thermoplastic, laser-permeable material which forms a closure of the filter cavity (7) on at least one end; and
c) a support body (19) made in the form of a fluid-permeable cylinder jacket into which the filter medium (3) is inserted;
d) the end cap (9, 13) being formed from a laser-permeable plastic material and being welded by means of laser transmission welding to the bordering end of the filter medium (3) after inserting a laser-impermeable welding film forming a barrier layer (31) between an enclosure (25) for the filter medium (3) formed by the end cap (9, 13) and the bordering end of the filter medium (3).

## Revendications

1. Procédé de fabrication d'un élément (1) de filtre, comprenant les stades :
a) on prévoit un milieu (3) filtrant, qui, sous la forme d'une pièce (3) annulaire, entoure une cavité (7) intérieure de filtre et contient une matière pouvant être scellée à chaud;
b) on prévoit au moins une coiffe (9, 13) d'extrémité en matière thermoplastique perméable au rayonnement laser formant une fermeture de la cavité (7) de filtre à au moins une extrémité;
c) on constitue une couche (31) d'arrêt imperméable au rayonnement laser entre la coiffe (9, 13) d'extrémité et l'extrémité voisine du milieu (3) filtrant et
d) on soude la coiffe (9, 13) d'extrémité et le milieu (3) filtrant en faisant traverser, par de l'énergie laser, la matière perméable au laser voisine de la couche (31) d'arrêt, de manière, par chauffage de la région voisine de la couche (31) d'arrêt, à mettre à disposition un volume de soudure, comme élément de joint, pour le joint soudé produit par le soudage par rayonnement laser,
**caractérisé**
**en ce que** l'on prévoit une pièce (19) d'appui sous la forme d'une enveloppe cylindrique, qui est perméable à du fluide et dans laquelle le milieu (3) filtrant est inséré;
**en ce que**, pour former la couche (31) d'arrêt, on insère une feuille de soudure imperméable au rayonnement laser dans une bordure (25), formée par la coiffe (9, 13) d'extrémité, du milieu (3) filtrant, ainsi qu'entre la coiffe (9, 13) d'extrémité et l'extrémité voisine du milieu (3) filtrant, la feuille (31) de soudure s'étendant sur l'extrémité de la pièce (3) annulaire et sur un bord (27) d'extrémité de la pièce (19) d'appui, et cela, en s'appliquant à la face intérieure, s'étendant dans un plan radial, de la coiffe (9, 13) d'extrémité et
**en ce que**, d'un coup, on produit un joint soudé entre l'extrémité de la pièce (3) annulaire, le bord (27) d'extrémité de la pièce (19) d'appui et de la surface voisine, plan radial par rapport à l'axe (5) longitudinal, de la bordure (25) de la coiffe (9, 13) d'extrémité.

2. Procédé suivant la revendication 1, **caractérisé en ce que** l'on forme une deuxième couche (31) d'arrêt, imperméable au rayonnement laser, sur la deuxième extrémité, opposée à la première coiffe (9) d'extrémité, du milieu (3) filtrant entre celui-ci et une deuxième coiffe (13) d'extrémité associée et, par soudure par rayonnement laser, on produit un joint soudé également entre la deuxième coiffe (13) d'extrémité et la matière (3) filtrante voisine.

3. Procédé suivant la revendication 1 ou 2, **caractérisé en ce que** l'on soude la deuxième coiffe (13) d'extrémité au moyen du soudage par rayonnement laser également à l'extrémité (27) associée de la pièce (19) d'appui.

4. Procédé suivant l'une des revendications 1 à 3, **caractérisé en ce que** l'on utilise, comme matière pour des coiffes (9, 13) d'extrémité et des pièces (19) d'appui, une matière plastique thermoplastique, notamment du polyamide, au moins la matière des coiffes (9, 13) d'extrémité étant perméable au rayonnement laser.

5. Procédé suivant l'une des revendications 1 à 4, **caractérisé en ce que** l'on utilise, comme matière de la feuille (31) de soudure, du polyamide en une épaisseur de 0,03 à 0,1 mm, de préférence de 0,05 mm.

6. Procédé suivant l'une des revendications 1 à 5, **caractérisé en ce que** l'on utilise, comme milieu filtrant, une pièce (3) annulaire en une nappe de matte de filtre pliée à plusieurs couches.

7. Elément (1) de filtre fabriqué par le procédé suivant l'une des revendications 1 à 6 et comportant :
a) un milieu (3) filtrant, qui, sous la forme d'une pièce (3) annulaire, entoure une cavité (7) intérieure du filtre et contient une matière pouvant être scellée à chaud;
b) au moins une coiffe (9, 13) d'extrémité en une matière thermoplastique et perméable au rayonnement laser formant une fermeture de la cavité (7) de filtre à au moins une extrémité et
c) une pièce (19) d'appui, qui est constituée sous la forme d'une enveloppe cylindrique perméable à du fluide, dans laquelle le milieu (3) filtrant est inséré, dans lequel
d) la coiffe (9, 13) d'extrémité est en une matière plastique perméable au rayonnement laser et, après insertion d'une feuille de soudure imperméable au rayonnement laser et formant une couche (31) d'arrêt entre une bordure (25), formée par la coiffe (9, 13) d'extrémité, du milieu (3) filtrant et l'extrémité voisine du milieu (3) filtrant, est soudée, au moyen d'une soudure par rayonnement laser, à l'extrémité voisine du milieu (3) filtrant.
